## Europäisches Patentamt
## European Patent Office
## Office européen des brevets

(19)

(11) Numéro de publication : **0 063 076**
**B1**

(12) # FASCICULE DE BREVET EUROPÉEN

(45) Date de publication du fascicule du brevet :
30.07.86

(51) Int. Cl.⁴ : **H 04 L 1/18**

(21) Numéro de dépôt : **82400580.5**

(22) Date de dépôt : **30.03.82**

(54) **Procédé de protection contre les erreurs de transmission des messages radio-télégraphiques et dispositif de mise en œuvre.**

(30) Priorité : 08.04.81 FR 8107039

(43) Date de publication de la demande :
20.10.82 Bulletin 82/42

(45) Mention de la délivrance du brevet :
30.07.86 Bulletin 86/31

(84) Etats contractants désignés :
DE GB

(56) Documents cités :
DE-B- 1 293 872
FR-A- 1 395 396
ELECTRONICS, vol. 41, no. 1, 8 janvier 1968, NEW YORK (US), A.E. FEIN: "Detecting data errors boosts transmission accuracy", pages 91-92
DEUXIEME COLLOQUE INTERNATIONAL SUR LES TELECOMMUNICATIONS NUMERIQUES PAR SATEL-LITE, 28-30 novembre 1972, PARIS (FR), P. LUCAS:"La fiabilité des systèmes de signalisation par canal commun", pages 60-69
MICTROPROCESSORS AND MICTROSYSTEMS, vol. 3, no. 5, juin 1979, IPC Business Press, LONDRES (GB), P.F. TURNEY: "Control of protocol for mobile radios", pages 203-208
PROCEEDINGS OF THE IEE, vol. 122, no. 2, février 1975, LONDRES (GB), R.M.F GOODMAN et al.: "Data transmission with variable-redundancy error control over a high-frequency channel", pages 113-118

(73) Titulaire : THOMSON-CSF
173, Boulevard Haussmann
F-75379 Paris Cedex 08 (FR)

(72) Inventeur : Prevot, Pascal
THOMSON-CSF SCPI 173, bld Haussmann
F-75360 Paris Cedex 08 (FR)
Inventeur : Durand, Bernard
THOMSON-CSF SCPI 173, bld Haussmann
F-75360 Paris Cedex 08 (FR)

(74) Mandataire : Lincot, Georges et al
THOMSON-CSF SCPI 19, avenue de Messine
F-75008 Paris (FR)

Description

La présente invention se rapporte à un procédé de protection contre les erreurs de transmission des messages radio-télégraphiques.

Très souvent dans un réseau radio-télégraphique on utilise le canal ionosphérique pour transmettre les signaux télégraphiques. De ce fait on rencontre de nombreux problèmes de propagation, ce qui entraîne l'apparition d'erreurs affectant les messages reçus à la station réceptrice. Les méthodes de protection contre les erreurs mettent en œuvre un matériel appelé codeur à l'émission et décodeur à la réception suivant le sens d'utilisation. De façon générale ce matériel est placé entre un émetteur qui émet le signal radio-télégraphique et un récepteur qui reçoit ce signal avec un décalage dans le temps, et des déformations dues au milieu de propagation lors de la transmission.

Ainsi pour éviter de tels inconvénients, on procède habituellement à un codage autocorrecteur d'erreurs qui détecte et corrige automatiquement les erreurs. Le faible taux résiduel d'erreur n'est obtenu qu'au prix d'une complexité souvent prohibitive de l'organe de calcul chargé du décodage.

Une deuxième solution du type de celle par exemple décrite dans le brevet français 1 395 396 permet d'éviter ces inconvénients de transmission. Elle consiste à utiliser un code détecteur d'erreur, et effectue une correction par retransmission. Le système décrit, assure la transmission des messages suivant un flux constant de bits qui assure la synchronisation, et des bits d'information et des bits de contrôle remplacent au moment de leur apparition, des bits de signaux de remplissage. Lorsque la transmission a lieu dans les deux sens, des subdivisions comportant des signaux de remplissage sont utilisées pour l'envoi de répliques d'erreurs et déclencher des répétitions de messages.

Ce procédé de transmission qui convient pour les transmissions de signaux télégraphiques par fil ne peut être directement transposé aux transmissions télégraphiques par voie hertzienne où la qualité des transmissions utilisant le canal ionosphérique est fortement assujettie aux aléas de la propagation qui peuvent perturber lors de leur transmission des paquets entiers d'éléments binaires d'information, ces perturbations peuvent être causées lors d'orages, les vents solaires, le bruit atmosphérique ou encore être dû aux « trous de propagation » connus sous le nom de fading. Dans ces conditions les modes de transmission à flux constant de bit ne peuvent plus être assurés convenablement en même temps que ne peut plus être assuré la synchronisation des messages décrite par exemple dans le brevet FR. 1 395 396. Dans ces conditions en effet lorsque la synchronisation des messages ne peut plus être assurée ou a été interrompue pour une raison quelconque au cours de la transmission, les informations sont perdues et il faut dans ce cas procéder à une retransmission du message dans son entier.

Le but de l'invention est de pallier les inconvénients précités.

A cet effet, l'invention a pour objet un procédé de protection contre les erreurs de transmission des messages radiotélégraphiques utilisant une liaison radiotélégraphique bilatérale à l'alternat mettant en liaison une station émettrice et une station destinatrice comportant chacun un récepteur et un émetteur, la transmission des messages entre les stations émettrice et destinatrice se faisant de façon synchrone, le procédé étant du type consistant à supprimer les éléments binaires de début et de fin du code télégraphique usuel, à coder puis à découper les messages pour former des blocs de mots binaires en leur adjoignant des caractères de contrôle avant leur émission, puis à décoder en réception les blocs émis en rangeant en mémoire à une adresse déterminée les mots sans erreurs et en émettant une phrase de demande de répétition à destination de l'émetteur des mots entachés d'erreurs reçus caractérisé en ce que chaque message est découpé en mots de n éléments binaires, chaque mot de n éléments binaires étant codé en mots de k éléments binaires, chaque message ainsi codé étant découpé en blocs de N mots de k éléments binaires auxquels est ajouté un mot de contrôle de Z éléments binaires pour constituer une trame de N + 1 mots, chaque bloc ainsi constitué étant émis séparément après avoir subi un entrelacement d'ordre N + 1 et ajouté une séquence de synchronisation d'éléments binaires et de trame, chaque bloc émis étant ensuite décodé en présence de la séquence de synchronisation par la station destinatrice puis désentrelacé en corrigeant au plus une erreur par mot erroné de k éléments binaires en détectant les mots comportant plus d'une erreur et en constituant et transmettant une phrase de demande de répétition de N + 1 éléments binaires, dans laquelle chaque élément binaire correspond à un mot du bloc reçu, la liaison entre les stations émettrice et destinatrice étant interrompue chaque fois que la transmission correcte d'un bloc est achevée.

Le procédé selon l'invention a pour avantage qu'il permet, en transmettant des messages découpés en blocs avec rupture de la liaison entre chaque bloc, d'assurer une bonne immunité des transmissions aux aléas de propagation en garantissant un débit optimal des informations écoulées. Tout au plus les perturbations ionosphériques peuvent affecter les informations d'un bloc sans pour autant affecter le message en son entier n'exigeant par conséquent que la retransmission du bloc perturbé sans nécessiter la retransmission du message dans sa totalité.

D'autres particularités et avantages de l'invention apparaîtront clairement dans la description du procédé suivant et dans la description de son dispositif de mise en œuvre en regard des figures annexées.

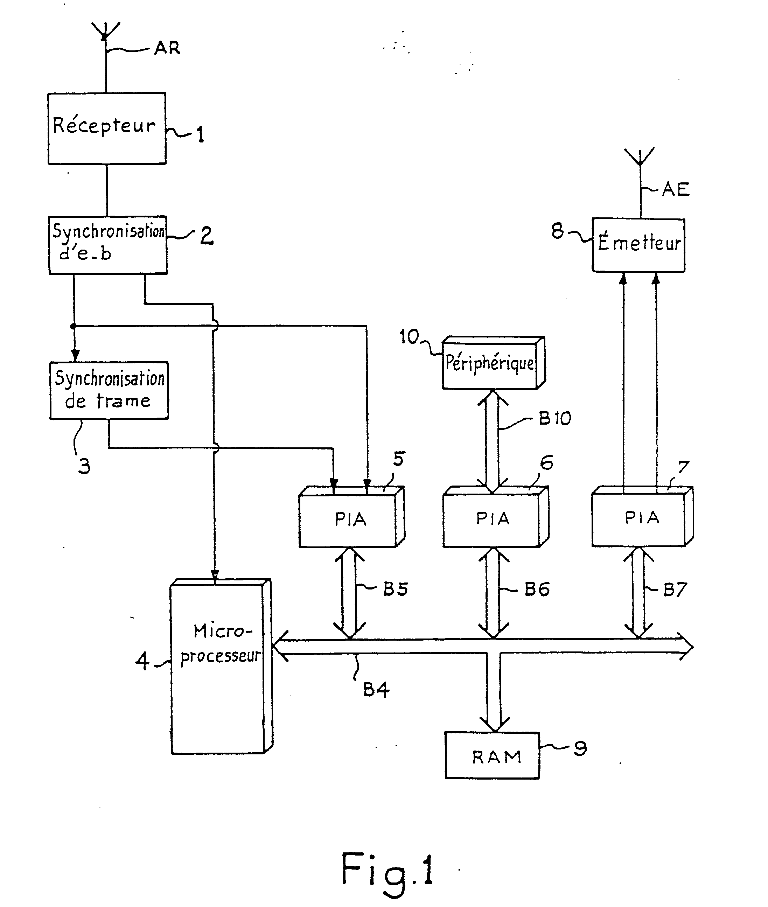

la figure 1 représente le synoptique du dispo-

sitif de mise en œuvre du procédé selon l'invention,

la figure 2 représente l'organigramme de la réception d'un message par la station destinatrice,

la figure 3 représente l'organigramme de la réception de demandes de répétitions envoyées par la station destinatrice à la station émettrice du message.

La mise en œuvre du procédé nécessite les moyens nécessaires à l'établissement d'une liaison radio bi-latérale alternativement dans un sens puis dans l'autre. Chaque station est donc munie du dispositif de mise en œuvre du procédé selon l'invention.

Chaque station émettrice/destinatrice possède un émetteur-récepteur haute fréquence 1 et 8, des moyens de production de signal de synchronisation d'élément binaire 2 délivrant un signal d'horloge, des moyens de production de signal de synchronisation de trame 3 délivrant un signal de détection de synchronisation, un microprocesseur 4 qui traite les signaux télégraphiques c'est-à-dire encore les messages ayant subi un traitement d'échantillonnage, et qui permet d'exécuter le procédé, un ensemble d'interfaces adaptateurs de périphériques (PIA) 5, 6, 7 dont l'un 6 est relié à des organes périphériques d'entrée/sortie 10 associés au microprocesseur 4, une mémoire vive (RAM) 9 associée au microprocesseur 4.

Le récepteur de type FSK à modulation par déplacement de fréquence reçoit le signal modulé, la rapidité de modulation est de 125 bauds dans cette réalisation. Le signal modulé est envoyé par la station émettrice et reçu par la station destinatrice au moyen d'une antenne réceptrice AR. Le récepteur 1 transmet ce signal après avoir effectué une démodulation, aux moyens de production de signal de synchronisation d'éléments binaires 2 constitués par un ensemble de diviseurs à rang variable qui décodent de façon classique le signal, délivrent un signal de sortie comprenant une suite d'état (0 ou 1) et un signal d'horloge. La transmission est synchrone, le temps est découpé en permanence en intervalles de temps par l'émetteur. Pour synchroniser la lecture des éléments binaires reçus par le récepteur on doit disposer d'un signal de synchronisation d'e. b. et de trame. Le signal d'horloge permettant de synchroniser l'émetteur à l'émission et le récepteur à la réception est constitué à partir du signal reçu en utilisant les transitions de 0 à 1 et de 1 à 0 des données pour maintenir la synchronisation des éléments binaires pendant la transmission (on cale une horloge au milieu de chaque e. b.). Le signal de sortie est transmis à des moyens de synchronisation de trame 3 constitués par un ensemble de séquenceurs du type P-N (pseudo-noise) connus en soi qui délivrent le signal de détection de synchronisation trame sous forme de séquences « pseudo-noise » traduites par un mot binaire. Le signal d'horloge issu des moyens de synchronisation d'e. b. 2 est appliqué à l'entrée de commande d'interruption du microprocesseur 4. Le microprocesseur 4 est de type 6802 travaillant sur des mots de 8 e. b. et effectuant des échanges à l'aide d'un bus de données bidirectionnel et d'un bus d'adressage de 16 e. b. référencés tous les deux par B4. Ce microprocesseur 4 est relié aux interfaces adaptateurs 5, 6 et 7 par un bus de données bidirectionnel de 8 e. b. référencé respectivement B5, B6, B7. Ces interfaces 5, 6, 7 encore dénommés PIA sont de type 6821. L'interface adaptateur 5 reçoit le signal d'horloge et le signal de sortie des moyens de synchronisation d'éléments binaires 2. L'interface adaptateur 6 est relié aux périphériques 10 d'entrée/sortie des messages et des ordres d'exécution (écran-clavier téléimprimeur) par l'intermédiaire d'une ligne omnibus bidirectionnelle B10 et permet de transmettre les ordres donnés au microprocesseur 4. L'interface 7 permet d'envoyer les signaux à émettre par l'émetteur 8 à l'aide de son antenne AE sur ordre du microprocesseur 4. Une mémoire vive 9 permet d'aller écrire les mots corrects du message à une adresse déterminée et d'aller lire les mots de contrôle au cours du procédé sur ordre du microprocesseur 4. La mémoire 9 est remplie cycliquement, et la gestion des adresses est effectuée par le microprocesseur 4. La mémoire 9 nécessite dans cette réalisation une capacité de l'ordre de 128 octets (1 octet = 8 e. b.).

Le message télégraphique de la station émettrice est traité par le microprocesseur 4 avant d'être émis de la manière suivante :

on supprime les éléments binaires de début et de fin du code télégraphique utilisé au niveau de l'organe d'entrée/sortie 10 (écran-clavier).

on découpe le message en mot de 7 éléments binaires.

on code les mots de 7 e. b. en mot de 15 e. b.

on découpe le message codé en blocs de 62 mots codés auxquels est ajouté un mot de 15 e. b. de contrôle signifiant si le message continue, s'il est terminé, ou si on répète le bloc précédent.

on émet un bloc de 63 mots de 15 e. b. après avoir effectué un entrelacement d'ordre 63 et après avoir ajouté une séquence de synchronisation d'élément binaire et de trame, une trame étant un bloc de 63 mots. La technique de l'entrelacement connue par exemple du document Electronics Vol. 41, n° 18, janvier 1968 ayant pour titre « Detecting data errors boosts transmission accuracy » pages 91-92, permet de diminuer les erreurs de transmission. Elle consiste avant la transmission, à mémoriser une suite de mots de code dans une mémoire ayant la forme d'une matrice de m lignes et n colonnes et à entrer, ligne après ligne, m mots (m = 63) de code de longueur n (n = 15 e. b.). Puis on lit la mémoire colonne par colonne afin de transmettre tous les symboles.

La station destinatrice opère alors de la manière suivante :

1ère phase : on reçoit et on décode un bloc émis par la station émettrice si la séquence de synchronisation est reçue. Dans le cas contraire, on attend le temps nécessaire à la réception totale du bloc et exécute la cinquième phase décrite ci-après ;

2e phase : on désentrelace c'est-à-dire qu'on fait entrer le train numérique dans une matrice identique à celle qui sert à l'entrelacement colonne par colonne, et le message de données est restitué en lisant la matrice ligne par ligne, puis on effectue une correction limitée à une erreur par mot de 15 e. b., on détecte les mots contenant plus d'une erreur et on constitue une phrase de 63 e. b. dont chaque e. b., correspondant à chaque mot du bloc reçu, est mis à « 1 » uniquement dans ce cas d'erreur ;

3e phase : on range en mémoire, à leur adresse respective des mots sans erreur. Si parmi les mots contenant encore des erreurs il y en a qui ont déjà été émis trois fois, un vote majoritaire est effectué sur les trois résultats et le mot majoritaire obtenu est rangé en mémoire.

4e phase : on procède à la lecture du mot de contrôle, s'il n'est pas compréhensible, on exécute la 5e phase ;

Si le mot de contrôle signifie fin, on interrompt la liaison s'il n'y a plus de mot erroné, sinon on exécute la 6e phase ;

5e phase : dans le cas ou le bloc est considéré comme non décodable c'est-à-dire lorsque la séquence de synchronisation n'est pas reçue, ou lorsqu'on procède à la lecture du mot de contrôle et que celui-ci n'est pas compréhensible, la phrase de répétition est constituée de 63 e. b. à « 1 » :

6e phase : la phrase de répétition est codée en la découpant en 9 mots de 7 e. b. auquel on ajoute un e. b. de parité pour constituer un octet. Chaque octet est alors émis vers l'émetteur du message principal 3 fois à la suite les unes des autres constituant un palier de demande de répétition précédé d'une séquence de synchronisation d'élément binaire et de trame (mot de synchronisation de trame).

La station émettrice traite les messages reçus de la façon suivante :

1ère phase : on reçoit et on décode le palier de demande de répétition émis par la station destinatrice. Si la synchronisation n'est pas prise dans le temps imparti, on exécute la 3e phase ;

2e phase : on décode le mot de 7 e. b. de la phrase de répétition en effectuant un vote majoritaire des 3 octets lui correspondant et en comparant la parité des 7 premiers e. b. du mot de vote obtenu à son 8e e. b. qui est le vote de parité de chaque résultat. Le mot n'est accepté que si ces e. b. sont identiques, si tous les mots sont acceptés, exécution de la 4e phase.

3e phase : c'est le cas où le mot de contrôle signifie une demande de répétition intégrale, on répète le bloc intégralement, sans son mot de contrôle ;

4e phase : le bloc à émettre est constitué, en tête, des mots codés de 15 e. b. qu'il faut répéter et qui sont tirés du bloc précédent, puis est complété par de nouveaux mots codés du message, s'il en reste, ou par des « 0 ». Selon le cas, le mot de contrôle signifie continuation ou fin.

5e phase : après désentrelacement du bloc ainsi obtenu, celui-ci est émis précédé d'une séquence de synchronisation d'e. b. et de trame..

Le cycle de phase continue jusqu'à rupture de la liaison destinatrice.

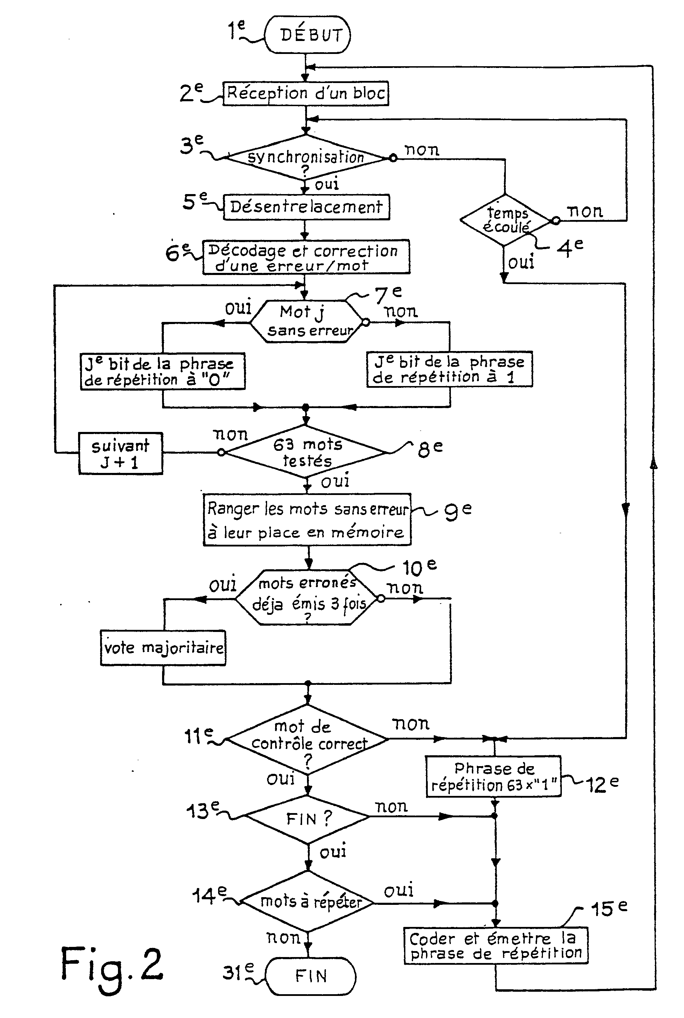

La figure 2 représentant l'organigramme de la réception d'un message par la station destinatrice comporte un ensemble de blocs diagrammes reliés par des flèches, représentant plus en détail les différentes phases d'exécution (suivant le sens des flèches) du dispositif de mise en œuvre du procédé.

1ère étape : début, cette phase consiste à initialiser le procédé à la réception d'un message

2e étape : réception d'un bloc du message émis par la station émettrice.

3e étape : test sur le signal de synchronisation la station destinatrice est-elle synchronisée ?

réponse oui : exécution de la 5e étape

réponse non : alors exécution de l'étape suivante

4e étape : test sur le temps écoulé, est-il supérieur au temps nécessaire à la réception totale du bloc ?

réponse oui : alors on exécute la 12e étape

réponse non : alors on exécute de nouveau la 3e étape et les étapes suivantes.

5e étape : désentrelacement du bloc.

6e étape : décodage et correction d'une erreur par mot du bloc.

7e étape : test sur chaque mot du bloc. Le mot J testé est-il sans erreur ?

réponse non : mettre l'e. b. correspondant à ce mot à « 1 » dans la phrase de répétition.

réponse oui : mettre l'e. b. correspondant à ce mot à « 0 » dans la phrase de répétition.

8e étape : test sur le nombre de mot testés, les 63 mots ont-ils été testés ?

réponse non : alors passer au mot suivant et exécuter de la 7e étape.

réponse oui : on exécute l'étape suivante.

9e étape : rangement des mots sans erreur à leur place en mémoire

10e étape : test sur le nombre de fois qu'ont été émis des mots ayant encore des erreurs. Le mot a t-il été émis déjà 3 fois ?

réponse oui : effectuer un vote majoritaire, puis passer à l'étape suivante.

réponse non : passer à l'étape suivante.

11e étape : test sur le mot de contrôle. Est-il correct ?

réponse non : exécuter la 12e étape

réponse oui : exécuter la 13e étape.

12e étape : mettre à « 1 » les 63 e. b. de la phrase de répétition, puis exécuter la 15e étape.

13e étape : tester si c'est la fin du message

réponse non : exécuter la 15e étape

réponse oui : exécuter l'étape suivante

14e étape : tester s'il y a des mots à répéter

réponse oui : exécuter l'étape suivante

réponse non : exécuter la 31e étape

15e étape : coder et émettre la phrase de répétition, lorsqu'elle est émise exécuter toutes les étapes à partir de la deuxième.

31e étape : Fin, rupture de la liaison.

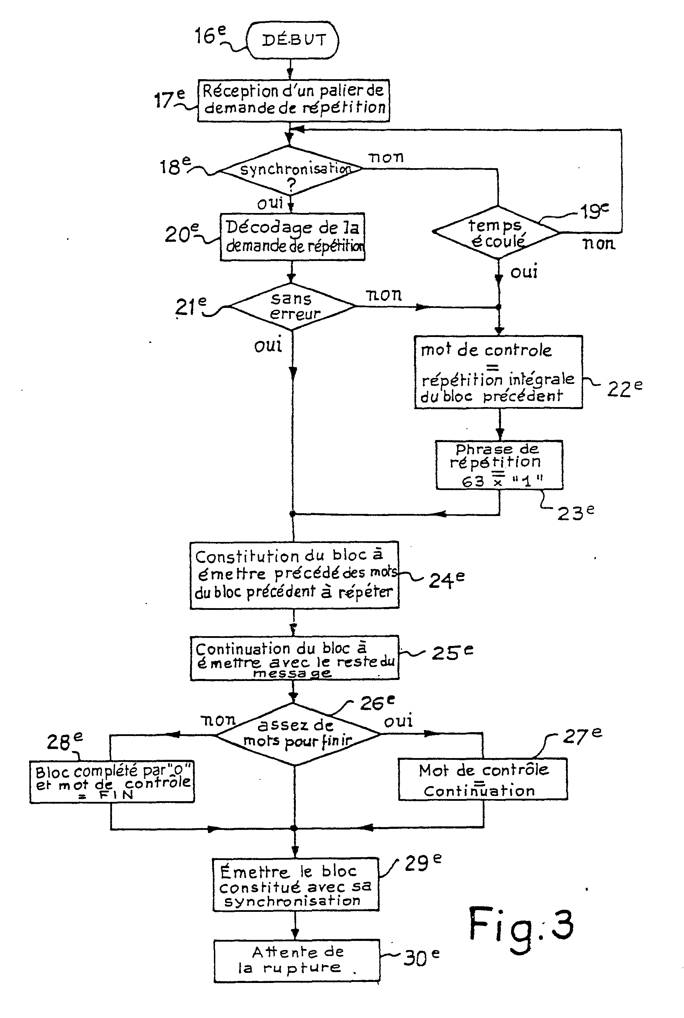

La figure 3 représente l'organigramme de la réception de demande de répétition envoyée par la station destinatrice à la station émettrice du message.

16e étape : début, consiste à initialiser le procédé à la réception de la demande de répétition.

17e étape : réception d'un palier de demande de répétition

18e étape : test sur le signal de synchronisation. La station émettrice (qui réceptionne le signal de demande de répétition) est-elle synchronisée ?

réponse oui : exécuter la 20e étape

réponse non : exécuter l'étape suivante

19e étape : test sur la durée du temps écoulé, est-il supérieur au temps nécessaire à la réception du palier de répétition.

réponse oui : exécuter la 22e étape.

réponse non : alors on exécute de nouveau la 18e étape et les étapes suivantes.

20e étape : décoder la demande de répétition

21e étape : test sur le mot de 7 e. b. de la phrase de répétition, le mot est-il accepté ?

réponse non : exécuter l'étape suivante

réponse oui : exécuter l'étape 24.

22e étape : lecture du mot de contrôle : il signifie répétition intégrale du bloc précédent.

23e étape : lecture de la phrase de répétition : elle comporte 63 e. b. égaux à « 1 ».

24e étape : constitution du bloc à émettre complété par les mots du bloc précédent à répéter.

25e étape : continuation du bloc à émettre avec le reste des mots codés du message à émettre.

26e étape : test : reste-t-il des mots codés du message à émettre

réponse oui : exécuter l'étape suivante

réponse non : exécuter la 28e étape.

27e étape : écrire dans le mot de contrôle le codage de la continuation puis exécuter la 29e étape.

28e étape : compléter le bloc par des « 0 » et écrire dans le mot de contrôle le codage de la fin, puis exécuter l'étape suivante.

29e étape : émettre le bloc constitué avec sa synchronisation.

30e étape : attendre la rupture de la liaison.

Le procédé présente l'avantage d'être mis en œuvre par un microprocesseur et un ensemble de moyens en relation avec ce microprocesseur dont les coûts sont faibles. Il présente de plus l'avantage, grâce à l'emploi de la technique d'utilisation de code autocorrecteur, et de la technique de retransmission, de garantir un taux d'erreur de transmission très faible.

**Revendications**

1. Procédé de protection contre les erreurs de transmission des messages radiotélégraphiques utilisant une liaison radiotélégraphique bilatérale à l'alternat mettant en liaison une station émettrice et une station destinatrice comportant chacune un récepteur et un émetteur, la transmission des messages entre les stations émettrice et destinatrice se faisant de façon synchrone, le procédé étant du type consistant à supprimer les éléments binaires de début et de fin du code télégraphique usuel, à coder puis à découper les messages pour former des blocs de mots binaires en leur adjoignant des caractères de contrôle avant leur émission, puis à décoder en réception les blocs émis en rangeant en mémoire à une adresse déterminée les mots sans erreurs et en émettant une phrase de demande de répétition à destination de l'émetteur des mots entachés d'erreurs reçus, caractérisé en ce que chaque message est découpé en mots de n éléments binaires, chaque mot de n éléments binaires étant codé en mots de k éléments binaires, chaque message ainsi codé étant découpé en blocs de N mots de k éléments binaires auxquels est ajouté un mot de contrôle de Z éléments binaires, pour constituer une trame de N + 1 mots, chaque bloc ainsi constitué étant émis séparément après avoir subi un entrelacement d'ordre N + 1 et ajouté une séquence de synchronisation d'éléments binaires et de trame, chaque bloc émis étant ensuite décodé en présence de la séquence de synchronisation par la station destinatrice puis désentrelacé en corrigeant au plus une erreur par mot erroné de k éléments binaires en détectant les mots comportant plus d'une erreur et en constituant et transmettant une phrase de (demande de) répétition de N + 1 éléments binaires, dans laquelle chaque élément binaire correspond à un mot du bloc reçu, la liaison entre les stations émettrice et destinatrice étant interrompue chaque fois que la transmission correcte d'un bloc est achevée.

2. Procédé de protection contre les erreurs de transmission des messages radio-télégraphiques selon la revendication 1, caractérisé en ce que le mot contrôle de z e. b. est un mot de k e. b. (z = k), et en ce que la trame constituée par l'ensemble de N mots plus le mot de z e. b. est ainsi constituée par N + 1 mots de k e. b. comprenant L mots répétés du message précédent.

3. Procédé de protection contre les erreurs de transmission des messages radio-télégraphiques selon les revendications 1 ou 2, caractérisé en ce que la phrase de demande de répétition est constituée par (N + 1)/n mots de n e. b., chaque (n + 1) e. b. étant émis au moins 3 fois à la suite les uns des autres constituant ainsi le palier, précédé d'une séquence de synchronisation d'élément binaire et d'une synchronisation de trame.

4. Procédé de protection contre les erreurs de transmission des messages radio-télégraphiques selon l'une quelconque des revendications 1 à 3, caractérisé en ce que à la suite du message émis par la station destinatrice, la station émettrice reçoit et décode le palier de demande de répétition lorsque la synchronisation est prise dans le temps imparti, les mots de n + 1 éléments binaires répétés au moins 3 fois subissant un vote majoritaire permettant de déterminer le mot sans erreur, en ce que lorsque plusieurs mots sont erronés, la station émettrice envoie un bloc constitué en tête des mots codés sur k e. b. qu'il faut répéter et qui appartiennent au bloc précédent et par de nouveaux mots codés du message, et en ce que lorsque le mot de contrôle signifie répétition intégrale, le bloc est intégralement répété sans son mot de contrôle.

## Claims

1. A method for protecting radio telegraph messages against transmission errors, the messages using a half duplex bilateral radio telegraph connection connecting a transmitter station and a receiver station, each comprising a transmitter and a receiver, the transmission of messages between the transmitting station and the receiving station being made synchroneously, the method being of the type consisting of suppressing the binary elements at the beginning and at the end of the usual telegraph code, of coding and then subdividing the messages for forming blocks of binary words, of adding thereto control characters prior to their transmission, then of decoding at the reception side the transmitted blocks by storing the correctly received words in a memory at a predetermined address and by transmitting, versus the transmitter, a sentence signifying a request for repetition of the words which have been received with errors, characterized in that every message is subdivided in words of n binary elements, each word of n binary elements being coded into words of k binary elements, each message coded in this way being subdivided in blocks of N words of k binary elements to which a control word of Z binary elements is added for constituting a frame of N + 1 words, each block constituted in this way being separately transmitted after having been interlaced of the rank N + 1 and after the addition of a synchronisation sequence relating to the binary elements and to the frame, each transmitted block being then decoded in the presence of the synchronisation sequence by the receiving station, then disinterlaced and corrected, if at most one error per erroneous word of k binary elements occurred, whereas the words showing more than one error are detected and a sentence signifying the request for repetition of N + 1 binary elements is constituted and transmitted, in which each binary element corresponds to one word of the received block, the connection between the transmitting station and the receiving station being interrupted each time the correct transmission of a block is terminated.

2. A method for protecting radio telegraph messages against transmission errors according to claim 1, characterized in that the control word of z bits is a word of k bits (z = k) and that the frame constituted by the group of N words plus the words of z bits is thus constituted by N + 1 words of k bits including L repeated words of the preceding message.

3. A method for protecting radio telegraph messages against transmission errors according to claim 1 or 2, characterized in that the sentence signifying the request for repetition is constituted by (N + 1)/n words of n bits, each (n + 1) bit being transmitted at least three times successively and thus constituting the socket, preceded by a sequence of bit synchronisation and of frame synchronisation.

4. A method for protecting radio telegraph messages against transmission errors according to any one of claims 1 to 3, characterized in that following to the transmission of a message by the receiving station, the transmitting station receives and decodes the socket relating to the request for repetition if the synchronisation is taken in the given time space, the words of n + 1 binary elements repeated at least three times being submitted to a majority vote permitting to determine the words without errors, that in the case of several erroneous words, the transmitting station sends a block starting with words coded on k bits which must be repeated and which belong to the preceding block, and followed by new coded words of the message, and that the block is completely repeated without control word, if the control word signifies the complete repetition.

## Patentansprüche

1. Verfahren zum Schutz von funktelegraphischen Nachrichten gegen Übertragungsfehler auf einer im Wechselsprechverfahren betreibbaren bilateralen Funktelegraphieverbindung zwischen einer Sendestation und einer Empfangsstation, die je einen Sender und einen Empfänger enthalten, wobei die Übertragung der Nachrichten zwischen der Sende- und der Empfangsstation synchron erfolgt und wobei gemäß dem Verfahren die Binärelemente zu Beginn und am Ende des üblichen Telegraphiekodes unterdrückt werden, die Nachrichten kodiert und dann in Blöcke von Binärwörtern zerschnitten werden und schließlich vor der Aussendung der Binärwörter Kontrollzeichen zugefügt werden, und weiter auf der Empfangsseite die ausgesandten Blöcke dekodiert werden, indem an einer bestimmten Speicheradresse die fehlerfreien Wörter aufgereiht werden und eine Folge von Wörtern betreffend den Wunsch nach Wiederholung der fehlerbehaftet empfangenen Wörter in Richtung auf den Sender ausgesandt werden, dadurch gekennzeichnet, daß jede Nachricht in Wörter von n Binärelementen zerlegt wird, wobei jedes Wort von n Binärelementen in Wörter von k Binärelementen kodiert wird und jede so kodierte Nachricht in Blöcke von N Wörtern zu je k Binärelementen zerschnitten werden, denen ein Kontrollwort mit Z Binärelementen zugefügt wird, um einen Rahmen von N + 1 Wörtern zu bilden, und wobei jeder so gebildete Block nach einer Verflechtung der Ordnung N + 1 und nach Zufügung einer Synchronisationssequenz für die Bi-

närelemente und den Rahmen getrennt ausgesandt wird, worauf jeder ausgesandte Block in Gegenwart der Synchronisationssequenz von der Empfangsstation dekodiert wird, dann entflochten wird, indem höchstens ein in einem fehlerhaften Wort von k Binärelementen enthaltener Fehler korrigiert wird, während die mehr als einen Fehler enthaltenden Wörter ermittelt werden und eine den Wunsch nach Wiederholung von N + 1 Binärwörtern ausdrückende Wortfolge gebildet und übertragen wird, in der jedes Binärelement einem Wort des empfangenen Blocks entspricht, wobei die Verbindung zwischen der Sende- und der Empfangsstation jedesmal unterbrochen wird, wenn die fehlerfreie Übertragung eines Blocks abgeschlossen ist.

2. Verfahren zum Schutz der funktelegraphischen Nachrichten gegen Übertragungsfehler nach Anspruch 1, dadurch gekennzeichnet, daß das Kontrollwort von z Bits ein Wort von k Bits (z = k) ist, und daß der durch die Gesamtheit der N Wörter zuzüglich des Worts von z Bits somit von N + 1 Wörtern zu k Bits gebildet wird, die L aus der vorhergehenden Nachricht wiederholte Wörter enthält.

3. Verfahren zum Schutz von funktelegraphischen Nachrichten gegen Übertragungsfehler nach den Ansprüchen 1 oder 2, dadurch gekennzeichnet, daß die den Wunsch nach Wiederholung darstellende Wortfolge von (N + 1)/n Wörtern zu n Bits gebildet wird, wobei jedes (n + 1)-te Bit mindestens dreimal nacheinander ausgesandt wird und somit den Sockel bildet, dem eine Binärelement-Synchronisationsfolge und eine Rahmensynchronisationsfolge vorangehen.

4. Verfahren zum Schutz der funktelegraphischen Nachrichten gegen Übertragungsfehler nach einem beliebigen der Ansprüche 1 bis 3, dadurch gekennzeichnet, daß nach der Aussendung der Nachricht durch die Empfangsstation die Sendestation den Wiederholwunsch-Sockel empfängt und dekodiert, wenn die Synchronisation in der gesetzten Zeit hergestellt wurde, wobei die Wörter von n + 1 Binärelementen, die mindestens dreimal wiederholt wurden, einer Mehrheitslogik unterliegen, die es ermöglicht, das fehlerfreie Wort zu bestimmen, daß die sendende Station bei Vorliegen von mehreren fehlerhaften Wörtern einen Block aussendet, der kopfseitig aus den in k Bits kodierten Wörtern, die wiederholt werden müssen und dem vorhergehenden Block angehören, sowie aus neuen kodierten Wörtern der Nachricht gebildet wird, und daß der Block insgesamt ohne sein Kontrollwort wiederholt wird, wenn das Kontrollwort die vollständige Wiederholung angibt.

Fig.1

```
            1ᵉ ( DÉBUT )

     2ᵉ  Réception d'un bloc

     3ᵉ        synchronisation          non
                      ?
                     oui                              temps        non
     5ᵉ   Désentrelacement                           écoulé
                                                          4ᵉ
     6ᵉ  Décodage et correction                        oui
          d'une erreur/mot

         oui      Mot j        7ᵉ    non
                sans erreur

     Jᵉ bit de la phrase          Jᵉ bit de la phrase
     de répétition à "O"          de répétition à 1

     suivant    non    63 mots    8ᵉ
      J+1              testés
                          oui

         Ranger les mots sans erreur   9ᵉ
         à leur place en mémoire

         oui    mots erronés    10ᵉ   non
                déja émis 3 fois
                      ?

         vote majoritaire

     11ᵉ      mot de              non
            contrôle correct
                  ?
                 oui                        Phrase de
                                           répétition 63x"1"   12ᵉ
     13ᵉ       FIN ?        non

                 oui

     14ᵉ    mots à répéter      oui
                                                               15ᵉ
                 non                        Coder et émettre la
                                           phrase de répétition
     31ᵉ ( FIN )
```

# Fig.2

Fig.3